# EUROPEAN PATENT SPECIFICATION

(11) **EP 3 354 341 B1**
(45) Date of publication and mention of the grant of the patent: **20.09.2023**
(21) Application number: 18150610.6
(22) Date of filing: 08.01.2018
(51) Int. Cl.: B01J 37/04, B01J 37/08, B01J 23/00, B01J 23/34, B01J 23/78, B01J 23/80, B01J 23/83, B01J 23/835, B01J 23/86, B01J 37/00, B01D 53/00

(54) **METHOD OF PRODUCTION OF PEROVSKITE STRUCTURE CATALYSTS, PEROVSKITE STRUCTURE CATALYSTS AND USE THEREOF FOR HIGH TEMPERATURE DECOMPOSITION OF N2O**
VERFAHREN ZUR HERSTELLUNG VON PEROWSKITSTRUKTURKATALYSATOREN, PEROWSKITSTRUKTURKATALYSATOREN UND VERWENDUNG DAVON ZUR HOCHTEMPERATURZERSETZUNG VON N2O
PROCÉDÉ DE PRODUCTION DE CATALYSEURS À STRUCTURE PÉROVSKITE, CATALYSEURS À STRUCTURE PÉROVSKITE ET LEUR UTILISATION POUR LA DÉCOMPOSITION DE N2O À HAUTE TEMPÉRATURE

(30) Priority: 30.01.2017 CZ 20170050
(43) Date of publication of application: 01.08.2018
(73) Proprietor: Ustav Fyzikalni Chemie J. Heyrovskeho AV CR, v.v.i, 182 23 Praha 8 (CZ)
(72) Inventor: Sadovska, Galina, 530 02 Pardubice (CZ); Sazama, Petr, 120 00 Praha 2 (CZ)
(74) Representative: Hartvichova, Katerina

(56) References cited:
- US-A1- 2002 035 035
- WU Q H ET AL: "X-ray photoelectron spectroscopy of La"0"."5Sr"0"."5MnO"3", MATERIALS LETTERS, ELSEVIER, AMSTERDAM, NL, vol. 59, no. 16, 1 July 2005 (2005-07-01), pages 1980-1983, XP025257797, ISSN: 0167-577X, DOI: 10.1016/J.MATLET.2005.01.038 [retrieved on 2005-07-01]
- N. RUSSO ET AL: "N 2 O Decomposition over Perovskite Catalysts", INDUSTRIAL & ENGINEERING CHEMISTRY RESEARCH, vol. 46, no. 12, 1 June 2007 (2007-06-01), pages 4226-4231, XP055480500, ISSN: 0888-5885, DOI: 10.1021/ie0612008
- TAPATI SARKAR ET AL: "Crystal structure and physical properties of half-doped manganite nanocrystals with size < 100nm", ARXIV.ORG, CORNELL UNIVERSITY LIBRARY, 201 OLIN LIBRARY CORNELL UNIVERSITY ITHACA, NY 14853, 22 April 2008 (2008-04-22), XP080409923, DOI: 10.1103/PHYSREVB.77.235112
- YUXI LIU ET AL: "Controlled Generation of Uniform Spherical LaMnO 3 , LaCoO 3 , Mn 2 O 3 , and Co 3 O 4 Nanoparticles and Their High Catalytic Performance for Carbon Monoxide and Toluene Oxidation", INORGANIC CHEMISTRY, vol. 52, no. 15, 12 July 2013 (2013-07-12) , pages 8665-8676, XP055479921, EASTON, US ISSN: 0020-1669, DOI: 10.1021/ic400832h
- Ana Ecija ET AL: "Synthetic Methods for Perovskite Materials; Structure and Morphology" In: "Advances in Crystallisation", 27 April 2012 (2012-04-27), XP055479879, ISBN: 978-953-51-0581-7 DOI: 10.5772/36540, * table 1 *

## Description

### Field of Art

The present invention relates to a method of production of perovskite structure catalysts for high temperature decomposition of N₂O. The invention resolves total elimination of nitrous oxide on perovskite catalysts at high temperatures in a gas mixture, which corresponds to a composition under Pt-Rh sieves in processes oxidating ammonia to NO during nitric acid production technology. The invention describes procedures of synthesis of such catalysts, characterization and catalytic effect thereof under nitric acid production conditions (temperatures above 700 °C and gas flow corresponding to GHSV 100,000 h⁻¹). The invention further relates to perovskite structure catalysts and use thereof for high temperature decomposition of N₂O.

### Background Art

Nitrous oxide (N₂O) is very often an undesirable product of combustion processes, in automobiles, heating plants, incinerators, in chemical production, etc. The reason for the effort to suppress its production is its ability to decompose ozone, making it a greenhouse gas that is approximately 310 times worse than CO₂ (Global Warming Potential GWP = 310) over a 100-year period. For this reason, an effort is put to reduce or eliminate N₂O emissions.

The production of nitric acid is one of the permanent producers of undesired N₂O, which produces nitrous oxide as an undesirable side product due to incomplete oxidation of ammonia following the equation (I):

2 NH₃ + 2 O₂ → N₂O + 3 H₂O (I)

It is therefore very important to find suitable catalysts to eliminate the resulting N₂O. Existing nitric acid production technologies are suitable for three possible ways of N₂O elimination: at the primary, secondary or tertiary level of the production technology. Removal of N₂O at the primary level would require such a catalyst, which would prevent the initial formation of N₂O during combustion of ammonia on Pt/Rh catalytic sieves. N₂O elimination at this stage of technology has not yet been achieved.

Removal of N₂O at the secondary level suggests using the space directly under the Pt/Rh catalytic gauzes, however, such catalyst has to be resistant towards high temperatures and a specific composition of the corrosive gas produced by oxidation of ammonia.

Removal of N₂O at the tertiary level would require another reactor, hence an investment, for the catalyst to be placed at the final stage of the HNO₃ production technology, in order to decompose N₂O in tail gas.

With respect to the structure of the existing nitric acid production technologies and the results of the catalytic research for the individual levels, the high temperature catalytic decomposition of N₂O to molecular oxygen and nitrogen directly under the Pt/Rh gauzes, at the so-called secondary level, seems to be the most suitable.

For high temperature decomposition of N₂O, metal oxide catalysts are known, as well as metal oxides on carriers, and metals in zeolites (produced by ionic exchange).

In the catalytic reactions, aluminosilicates are often used, and these materials have been tested for high temperature decomposition. DE19805202 discloses a catalyst for N₂O decomposition based on Cordierite doped with V, Cr, Fe, Ni, Co, Cu, Bi, Ca, Zn, Al, working at 800 - 1000 °C, however the preparation and relevant results of the catalytic tests are not disclosed therein.

Zeolite ferrierite with Si/Al = 27.5 was subjected to ion exchange in a ferrous sulfate solution in WO2012025630, and was tested at 850 °C with a conversion of over 99 %. Application of zeolitic catalyst in industrial conditions, however, requires high stability due to rapid temperature rise and its own catalytic functionality at temperatures even exceeding 900 °C. Because of the high H₂O content in zeolite structures and the low temperature stability of ferrierite, the lifetime of this catalyst is short and is therefore completely unsuitable for industrial applications.

WO0202230 describes the use of cerium oxide as a catalytically active carrier (alumina and MgO are completely inert). The document presents synthesis and function of a catalysts composed of 0.1-10 mol Co₍₃₋ₓ₎MₓO₄, wherein M is Fe or Al and x = 0-2, on a support of CeO₂, Al₂O₃ and MgO with a possible addition of 0.01-2 wt % ZrO₂. Comparison of catalysts operating at 900 °C, 5 bar and GHSV = 55,000-110,000 h⁻¹ suggests that the conversion of N₂O using Co₃O₄-CeO₂-0.2% ZrO₂ catalyst helps to reduce the degradation of catalyst activity over time, which is around 95 % even after 100 days, while the Co₂AlO₄ and Co₂AlO₄ catalysts on MgO carrier lose most of their activity after several days of use. However, cobalt-containing catalysts are suspected that this metal acts as a catalytic poison for Pt/Rh sieves and is therefore also unsuitable for industrial applications in the production of nitric acid.

US2009130010 discloses Rh, Rh/Pd or Rh₂O₃ precious metal catalysts on ZrO₂, Al₂O₃ or TiO₂ carriers. However, the best working catalysts with 0.6 % of Rh are capable of decomposing only 80 % of N₂O produced from ammonia combustion at 880 °C.

In US2010209325, use of various impregnating processes of cobalt and cerium on a ceramic basis of MgO-Al₂O₃ burnt at 1200 ° C leads to catalysts having their activity of about 90 % at 800 °C. Again, there is cobalt ion which could migrate into the Pt/Rh sieves and thus reduce their catalytic activity.

The spinel disclosed in US6723295 was prepared by CuO, ZnO and Al₂O₃ calcination, and its catalytic activity was monitored at 750 °C only. After 21 days it showed a conversion of maximum 68 %. The same catalyst composed of 16-20-64 % or 18-20-62 % CuO-ZnO-Al₂O₃, which is the subject of WO2005000738 (A1), does not allow complete elimination of the resulting N₂O in exhaust gases even at 980 °C.

Mixed oxide Fe₂O₃-Al₂O₃ catalysts were prepared by Giecko et al. (Giecko G., Borowiecki T., Gac W., Kruk J.: Catalysis Today, 2008, 137, 403-9) by precipitation from iron and aluminum nitrate solutions, and providing a 95% conversion of N₂O at 750 °C.

There are also other promising functional materials as catalysts based on hexaaluminates known from the literature (Santiago M., Pérez-Ramírez J.: Environ Sci Sci., 2007, 41, 1704-9), having the formula ABAl₁₁O₁₉ (where A = La, Ba, B = Mn, Fe, Ni), which were prepared by precipitation from the solution of nitrates with ammonium carbonate. The authors report conversion of 95 % N₂O at 830 °C and GHSV = 30,000 mL/h g.

Perovskite catalysts containing La-Ni, La-Ni-Cu, La-Ni-Co, deposited on a honeycomb carrier WO2007104403 are capable to achieve 95% conversion of N₂O to molecular nitrogen and oxygen gas at 900 °C. However, the preparation of these catalysts again uses toxic ethylene glycol and is therefore not suitable for industrial applications. The use of toxic starting materials is not industrially applicable.

Russo et al. (Ind. Eng. Chem. Res. 2007, 46, 4226 - 4231) described N₂O decomposition over perovskite catalysts LaCrO₃, LaMnO₃, LaFeO₃ and LaCoO₃. These catalysts were prepared by highly exothermic and self-sustaining reaction (solution combustion synthesis, SCS), including placing a concentrated aqueous solution of various precursors, such as metal nitrites and urea, into oven at 600 °C. The resulting catalysts were fully characterized and their use as high temperature N₂O decomposition catalysts was evaluated. The best catalytic performance was observed for LaCoO₃, showing 50% conversion of N₂O at 455 °C in the absence of oxygen.

La_{0.5}Sr_{0.5}MnO₃ was prepared and its chemical structure was studied using X-ray photoelectron spectroscopy by Qi-Hui Wu et al (Materials Letters 59 (2005), 1980-1983. The perovskite structure was confirmed, however no hint of use as catalyst for nitrogen oxide decomposition was mentioned there.

Tapati Sarkar et al. reported structural and property measurements of nanocrystals of half-doped La_{0.5}Ca_{0.5}MnO₃ of average particle size of 15 nm. The publication does not mention any use of this species for catalysis of high temperature N₂O decomposition.

Yuxi Liu et al. (Inorg. Chem. 2013, 52, 8665 - 8676) describe controlled generation of uniform LaMnO₃, LaCoO₃, Mn₂O₃ and Co₃O₄ nanoparticles using PMMA-templating method, and their performance for CO and toluene oxidation.

Ana Ecija et al. (Advances in Crystallisation, 27 April 2012, XP055479879) describe different synthetic methods for perovskite materials, their structure and morphology. Among the methods described, glycine-nitrate route, sol-gel and freeze-drying techniques require lower calcination temperatures to yield pure crystals of perovskite phases, however they are more time consuming and require more controlled synthesis conditions. Ceramic method described therein always yields phases with higher particle size, which can be a disadvantage if the final compounds are to be used in an application that requires high specific area.

US 2002/035035 (Kirchnerova J. et al.) describes a perovskite structure metal oxide catalysts of the general formula ABO₃ for complete oxidation at high temperatures and their preparation.

### SUMMARY OF THE INVENTION

The present invention relates to perovskite type catalysts, to a process of production thereof and to use thereof for high temperature N₂O decomposition. The production is carried out without the use of toxic ethylene glycol, and is therefore suitable for industrial applications. This synthesis is available even on industrial scale and provides for the desired perovskite structure with a high catalytic effect on N₂O decomposition at high temperatures. The catalytic tests confirm the complete elimination of N₂O at temperatures above 700 °C in the gas flow mixture of the composition corresponding to the combustion of ammonia. Representatives of prior art catalysts were compared with the catalysts according to the present invention under the same conditions. The tests confirmed very high performance of the perovskite type catalysts.

The object of the present invention is a method of production of perovskite structure catalysts for high temperature decomposition of N₂O, as defined in claim 1 -6.

The mutual stoichiometric ratio of solid water soluble salts of the cations means a ratio of the amounts of the individual reactants, which entirely and completely react into the given perovskite type catalyst. For example, when preparing the catalyst of formula La_{0.5}Sr_{0.5}MnO₃, the molar ratios of the cations of the reacting water soluble salts of La, Sr and Mn will be 1: 1: 2.

The principle of the method is mixing of the salts of the respective water soluble cations together with the stoichiometric excess of anionic salt, resulting in a formation of a poorly soluble salt, having water solubility below 0.01 mol/L at 20 °C. In this system of substances, addition of a small amount of water leads to partial dissolution of the cationic salt and to its immediate reaction with the anion of the partially dissolved anionic precipitant, giving a low soluble product. In order to facilitate partial dissolution and precipitation, surfactant is added.

The process can be described by the general equation (II),

(1-x)AX(aq) + xBX(aq) + yCX(aq) + (1-y)DX(aq) + qMN(aq) + nH₂O(l) → A(₁₋ₓ)BₓC_{y}D(_{1-y})N_{q.}nH₂O(s) + qMX(aq) (II)

wherein X is independently an anion able to form with A, B, C or D a water soluble salt according to the definition above; N is an anion selected from the group comprising carbonate, bicarbonate, oxalate, sulfate, metaphosphate, phosphate, hydroxide, nitrite, chromate and dichromate; M is a cation selected from the group comprising Na+, K+, NH4, able to form a water soluble MN salt, corresponding to the above definition.

The resulting soluble MX salts are then washed and filtered off. The residual solid phase A(₁₋ₓ)BₓC_{y}D(_{1-y})N_{q}.nH₂O is firstly dryed and then calcinated at a temperature allowing removal of crystal water and volatile components to form oxides with perovskite structure cations. The basic condition of this procedure is therefore the formation of an insoluble salt of a cation, which originally formed a different soluble salt. Soluble salts of cations must, when partially dissolved, come into contact with the partially dissolved salt of an anion, which forms an insoluble salt with the cations.

In A is selected from the group consisting of La, Ba, Zn, Ca, Zr, Cu, Cr, Y, Ce, Mg, Tl, Pb, Ag; B is selected from the group consisting of Sr, Cu, Co, Ge, Ni, Ti, Cd, La, Ce; C and D are selected from the group consisting of Mn, Al, Ce, Co, Sn, Sb, V, Fe, Zr, W, Mo.

In the most prefered embodiment, the method of production of perovskite structure catalysts for high temperature decomposition of N₂O is the above-mentioned method of preparation of compounds selected from the group consisting of La_{0.5}Sr_{0.5}MnO₃, LaMnO3, Zn_{0.5}Cu_{0.5}AlO₃, Ca₀.₇Cu₀.₃MnO₃, Zn_{0.5}Sr_{0.5}Ce_{0.2}Mn_{0.8}O₃, Zr_{0.5}Co_{0.5}CeO₃, LaGe_{0.2}Fe_{0.8}O₃, Cr_{0.8}Ni_{0.2}CeO₃, Mg_{0.5}Sr_{0.5}SnO₃, PbTi_{0.2}Mn_{0.8}0₃, Ce_{0.5}Sr_{0.5}ZrO₃, Mg_{0.5}Cd_{0.5}WO₃, BaMnO₃, CuMnO₃, YCoO₃, CeCoO₃, LaSbO₃, Y_{0.5}Sr_{0.5}MnO₃, MgTi_{0.2}Mn_{0.8}O₃, Ce_{0.5}Sr_{0.5}MnO₃, TlVO₃, La_{0.5}Sr_{0.5}FeO₃, CaTi_{0.8}Ce_{0.2}O₃, Ca_{0.7}Ce_{0.3}MnO₃, AgCe_{0.5}Mn_{0.5}O₃, Pb_{0.2}La_{0.8}MoO₃, particularly La_{0.5}Sr_{0.5}MnO₃ and LaMnO₃.

In a preferred embodiment, the length of the homogenization of the mixture in step ii) is at least 5 minutes, preferably 5 to 20 minutes.

The surfactant is selected from (C16 to C18) fatty acids, polyoxyethylenes, (C12 to C20) carboxylic acid esters, polyethylene glycol esters. Preferably, the surfactant is polyethylene glycol having its M_{w} in the range of 200 to 800, most preferably the surfactant is PEG-400.

The surfactant is in the form of 30 to 70% by weight aqueous solution, more preferably 40 to 60% by weight aqueous solution. The water-soluble salts of cations A, B, C and D are selected from the group comprising salts of inorganic acids, organic monocarboxylic, dicarboxylic and tricarboxylic (C1 to C10) acids and (C1-C4) alkoxide salts, preferably water-soluble salts of cations A, B , C and D are sulfates, carbonates, halides, nitrates, phosphates, acetates, formates, citrates, oxalates, lactates, ethoxides thereof, most preferably the water-soluble salts of A, B, C and D are their nitrates, sulphates, chlorides, phosphates and carbonates.

The water-soluble salt of the anion selected from the group comprising carbonate, bicarbonate, oxalate, sulfate, metaphosphate, phosphate, hydroxide, nitrite, chromate and dichromane in step i) has a cation selected from the group comprising Na⁺, K⁺, NH₄⁺, preferably, the water-soluble salt is sodium carbonate, ammonium carbonate, sodium oxalate, potassium oxalate or ammonium oxalate.

In another preferred embodiment of the method according to the present invention, the solid phase drying in step vii) takes place at the temperature of 120 °C, preferably for at least two hours.

In another preferred embodiment of the method according to the present invention, the calcination in step viii) takes place at the temperature in the range of 800 °C to 1300 °C, preferably 900 °C to 1000 °C, preferably at 950 °C, more preferably for 4 hours.

The object of the present invention is further a catalyst of perovskite structure for high temperature decomposition of N₂O, obtainable using the method according to the present invention, which is selected from the group consisting of Zn_{0.5}Cu_{0.5}AlO₃, Ca_{0.7}Cu_{0.3}MnO₃, Zn_{0.5}Sr_{0.5}Ce_{0.2}Mn_{0.8}O₃, Zr_{0.5}Co_{0.5}CeO₃, LaGe_{0.2}Fe_{0.8}O₃, Cr_{0.8}Ni_{0.2}CeO₃, Mg_{0.5}Sr_{0.5}SnO₃, PbTi_{0.2}Mn_{0.8}O₃, Ce_{0.5}Sr_{0.5}ZrO₃, Mg_{0.5}Cd_{0.5}WO₃.

The object of the present invention is also to use the perovskite structure catalysts, selected from La_{0.5}Sr_{0.5}MnO₃, Zn_{0.5}Cu_{0.5}AlO₃, Ca_{0.7}Cu_{0.3}MnO₃, Zn_{0.5}Sr_{0.5}Ce_{0.2}Mn_{0.8}O₃, Zr_{0.5}Co_{0.5}CeO₃, LaGe_{0.2}Fe_{0.8}O₃, Cr_{0.8}Ni_{0.2}CeO₃, Mg_{0.5}Sr_{0.5}SnO₃, PbTi_{0.2}Mn_{0.8}O₃, Ce_{0.5}Sr_{0.5}ZrO₃, Mg_{0.5}Cd_{0.5}WO₃
for high temperature decomposition of N₂O. High temperature decomposition of N₂O means decomposition of N₂O at temperatures above 700 °C, preferably at temperatures above 850 °C, most preferably at temperatures above 900 °C.

The perovskite type catalysts prepared by the method of the present invention are highly thermally stable and have a long-term effect on the decomposition of N₂O at temperatures exceeding 700 °C under conditions corresponding to the combustion of ammonia during the production of nitric acid. The method according to the present invention does not use toxic substances as methods known in the art, it is economically advantageous and guarantees the desired perovskite structure. It can therefore be applied on an industrial scale.

### Brief Description of Figures

Figure 1: XRD diffractogram of the LSM-P1 catalyst prepared according to Example 1
Figure 2: XRD diffractogram of the LSM-P2 catalyst prepared according to Example 2
Figure 3: XRD diffractogram of the LSM-P3 catalyst prepared according to Example 3
Figure 4: XRD diffractogram of the LSM-P4 catalyst prepared according to Example 4
Figure 5: XRD diffractogram of the LSM-P5 catalyst prepared according to Example 5
Figure 6: XRD diffractogram of the LSM-P6 catalyst prepared according to Example 6

### Examples

### Example 1: Preparation of La_{0.5}Sr_{0.5}MnO₃ from lanthanum chloride in the presence of sodium carbonate hexahydrate

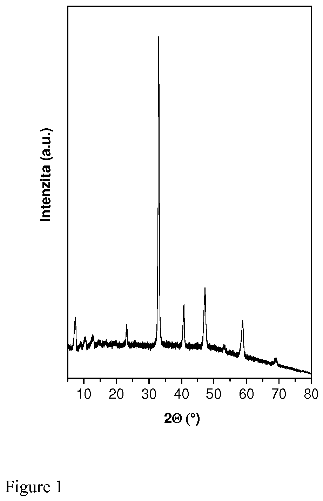

8.6 g LaCl₃.7H₂O, 7.8 g MnSO₄.H₂O, 4.9 g Sr(NO₃)₃ and 32.9 g Na₂CO₃.10H₂O was stirred in an automatic agate mortar for 10 minutes. A 50% aqueous solution of polyethylene glycol PEG-400 was then added dropwise resulting in a formation of a paste (ca. 5 mL), which was then stirred for additional 20 min. The resulting intermediate was allowed to stand overnight and the next day it was stirred in water until the suspension was formed allowing transfer to the centrifuge vessels or pouring onto a filtration partition. Subsequently, the separation of the solid phase from the solution (centrifugation, filtration) and repeated washing with water and separation of the solid phase followed. The solid phase was dried at 120 °C for 2 hours, pulverized and calcined at 950 °C for 4 hours. The resulting La₀.₅Sr₀.₅MnO₃ catalyst (LSM-P1) was pressed into granules and used for catalytic tests. The resulting X-ray diffraction of the prepared catalyst is shown in Fig. 1.

### Example 2: Preparation of La_{0.5}Sr_{0.5}MnO₃ from lanthanum chloride in the presence of sodium carbonate hexahydrate and anhydrous sodium carbonate

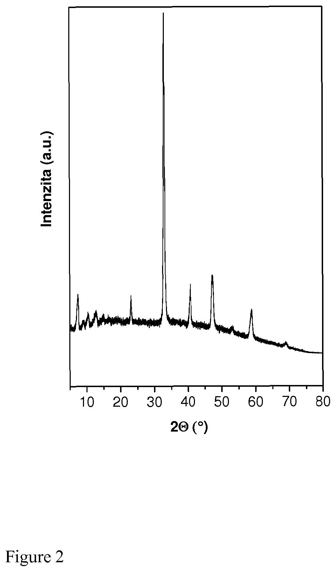

8.6 g LaCl₃.7H₂O, 7.8 g MnSO₄.H₂O, 4.9 g Sr(NO₃)₃ and 16.5 g Na₂CO₃.10H₂O and 6.1 g Na₂CO₃ was stirred in an automatic agate mortar for 10 minutes. The procedure of Example 1 was then repeated and the La₀.₅Sr₀.₅MnO₃ catalyst (LSM-P2) was obtained. The resultant X-ray diffraction of the prepared catalyst is shown in Fig. 2.

### Example 3: Preparation of La₀.₅Sr₀.₅MnO₃ from lanthanum carbonate in the presence of sodium carbonate hexahydrate and anhydrous sodium carbonate

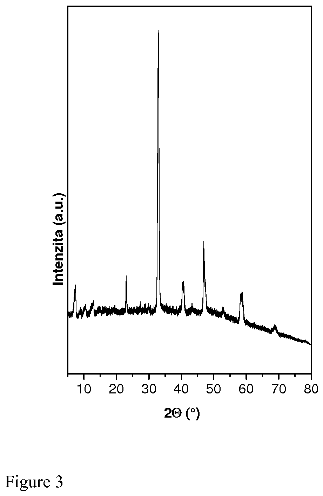

5.5 g La₂(CO₃)₃.xH₂O, 7.8 g MnSO₄.H₂O, 4.9 g Sr(NO₃)₃ and 10.9 g Na₂CO₃.10H₂O and 4.04 g Na₂CO₃ was stirred in an automatic agate mortar after 10 min. The procedure of Example 1 was then repeated and the La₀.₅Sr₀.₅MnO₃ catalyst (LSM-P3) was obtained. The resultant X-ray diffraction of the prepared catalyst is shown in Fig. 3.

### Example 4: Preparation of La_{0.5}Sr_{0.5}MnO₃ from lanthanum nitrate in the presence of sodium oxalate

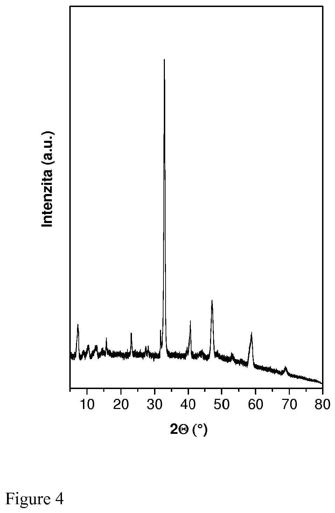

10.0 g La(NO₃)₃.6H₂O, 7.8 g MnSO₄.H₂O, 4.9 g Sr(NO₃)₃ a 19.4 g Na₂C₂O₄ was homogenized in an automatic agate mortar for 5-10 min. A 50% polyethylene glycol PEG-400 solution (ca. 10 mL) was then added dropwise resulting in a formation of a paste, which was then stirred for a total time (including homogenization) of 30 minutes. The resulting intermediate was kept at room temperature overnight and the next day it was stirred in water until the suspension was formed. Subsequently, the suspension was centrifuged, followed by repeated washing with water and centrifugation. The solid phase was dried at 120 °C for 2 hours, pulverized and calcined at 950 °C for 4 hours. The resulting La₀.₅Sr₀.₅MnO₃ catalyst (LSM-P4) was pressed into granules and used for catalytic tests. The resulting X-ray diffraction of the prepared catalyst is shown in Fig. 4.

### Example 5: Preparation of La_{0.5}Sr_{0.5}MnO₃ from lanthanum nitrate in the presence of ammonium oxalate

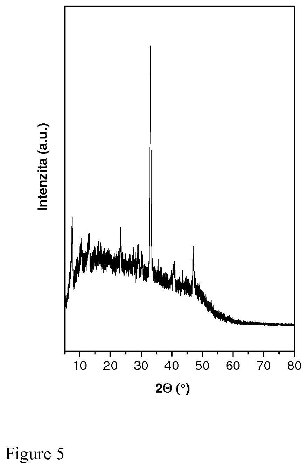

5.0 g La(NO₃)₃.6H₂O, 3.9 g MnSO₄.H₂O, 2.5 g Sr(NO₃)₃ a 8.2 g (NH₄)₂C₂O₄ were homogenized in an automatic agate mortar for 5-10 min. Subsequently, the procedure of Example 4 was repeated and the La₀.₅Sr₀.₅MnO₃ (LSM-P5) was obtained. The resulting X-ray diffraction of the prepared catalyst is shown in Fig. 5.

### Example 6: Preparation of LaMnO₃ from lanthanum nitrate in the presence of sodium oxalate

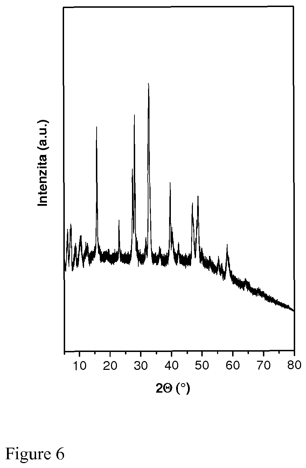

17.3 g La(NO₃)₃.6H₂O, 6.8 g MnSO₄.HO a 13.4 g Na₂C₂O₄ was homogenized in an automatic agate mortar for 5-10 min. The procedure of Example 4 was then repeated and the LaMnO₃ catalyst (LSM-P6) was obtained. The resulting X-ray diffraction of the prepared catalyst is shown in Fig. 6.

### Comparative Example 1: Preparation of Rh/Al₂O₃ (Rh/Al₂O₃-SP1) catalyst

The rhodium impregnation on α-alumina was carried out according to EP1586365 (Rh/Al₂O₃-SP1).

### Comparative Example 2: Preparation of Cu-Zn-Al spinel (CZA-SP2)

Spinel Cu-Zn-Al (CZA-SP2) was prepared according to patent US2007/0098613A1 by calcination of CuO, ZnO and Al₂O₃.

### Comparative Example 3: Preparation of 0.9% Fe on ferrierite (Fe-FER-SP3)

A sample of 0.9% Fe on ferrierite (Fe-FER-SP3) catalyst, which corresponds to the claims in WO2012025630, was prepared as described in Sádovská G., Tabor E., Sazama P., Lhotka M., Bernauer M., Sobalik Z.: Cat. com., 2017, 89, 133-137 by impregnation of the parent zeolite granules (ferrierite, Si/Al=22), pre-dried at 120 °C for 4 hours with FeCl₃ in acetylacetone. After 12 hours, the sample was dried at air and subjected to vacuum decomposition at 100 °C for 1 hour and at 350 °C for 3 hours. Subsequently, it was cooled to room temperature, washed with distilled water and calcinated for at 450 °C for 12 hours and at 950 °C for 4 hours.

Comparative Example 4: Preparation of *70% Fe₂O₃ α 30% Al₂0₃ (FeAl-SP5) catalyst* Mixed biphasic iron oxide containing iron and alumina (FeAl-SP5) was prepared according to the article Giecko G., Borowiecki T., Gac W., Kruk J.: Catalysis Today, 2008, 137, 403-9.

Comparative Example 5: *Preparation of the LaFeAl₁₁O₁₉ (LFA-SP6) hexaluminate catalyst* La-Fe-Al hexaaluminate (LFA-SP6) was prepared by precipitation from solution of the metal nitrates according to the publication Santiago M., Pérez-Ramírez J.: Environ. Sci. Technol., 2007, 41, 1704-9.

### Example 7: Evaluation of the efficiency of the catalyst of Example 1

A gas mixture containing 1000 ppm N₂O, 0.5% NO, 2% O₂ a 10 % H₂O in He was passed through a quartz reactor under 1 bar pressure with a GHSV of 100,000 h⁻¹ (contact time 0.003 s) over a catalytic bed containing the catalyst from Example 1. After reaching a temperature of 900 °C, it subsequently dropped by 50 °C steps with the isotherm at a given temperature for 1 h. The composition of the output mixture showed 100% N₂O elimination in the tested temperature range.

### Example 8: Evaluation the efficiency of the catalysts of Examples 2 to 6

The catalytic test described in Example 7 was applied to the other perovskite catalysts prepared in Examples 2-6, which under the given conditions, also completely eliminated the presence of N₂O in the gas mixture.

### Example 9: Comparison of catalyst efficiency

The catalysts prepared according to Examples 1 to 6 and also according to Comparative Examples 1-5 were subjected to catalytic tests in the same gas mixture of the same flow as given in Example 7, however a lower sample volume giving a higher GHSV = 350,000 h⁻¹ (contact time <0.001 s) was used in order to detect differences in the catalytic activity of the individual catalysts. The obtained temperature dependencies of conversion of N₂O are shown in Tables 1 to 4.

### Example 10: Comparison of catalyst efficiency after 12 days of use

The catalysts of Comparative Examples 1 to 3 and the catalyst of Example 4 were subjected to a long-term load in the gas of ammonia burnerat 800 °C for 12 days. The catalytic activity was again tested under the conditions described in Example 9. The resulting values are shown in Table 4. The obtained data show that LSM-P4 catalyst prepared according to Example 4 allows > 99% decomposition of undesired N₂O at high temperatures and higher load, which confirms its high thermal and catalytic stability.

**Table 1: Known catalysts prepared according to Comparative example 1 to 5.**

| **Catalyst** | **Composition** | **Conversion (%) (GHSV = 350,000 h⁻¹)** | | | | |
|---|---|---|---|---|---|---|
| | | **700 °C** | **750 °C** | **800 °C** | **850 °C** | **900 °C** |
| Rh/Al₂O₃-SP1 | 0.6%Rh na Al₂O₃ | 94 | 97 | 99 | 100 | 100 |
| CZA-SP2 | ZnCuAlO4 | 65.2 | 89.9 | 98.2 | 99.6 | 100 |
| Fe-FER-SP3 | 0.9%Fe na FER | 100 | 100 | 100 | 100 | 100 |
| FeAl-SP4 | 70% Fe₂O₃ + 30% Al₂0₃ | 2 | 9.6 | 27.3 | 58.3 | 87 |
| LFA-SP5 | LaFeAl₁₁O₁₉ | 2 | 5 | 11.1 | 35.9 | 69 |

**Table 2: Catalytic properties of La_{0.5}Sr_{0.5}MnO₃ catalyst, prepared according to Examples 1 to 3.**

| **Catalyst** | **Conversion (%) (GHSV = 350,000 h⁻¹)** | | | | |
|---|---|---|---|---|---|
| | **700 °C** | **750 °C** | **800 °C** | **850 °C** | **900 °C** |
| LSM-P1 | 67.1 | 85.9 | 96.9 | 99.7 | 100 |
| LSM-P2 | 51.7 | 84.5 | 95.7 | 100 | 100 |
| LSM-P3 | 30.4 | 58.5 | 85.3 | 96.3 | 100 |

**Table 3: Composition and catalytic properties of perovskite catalysts prepared according to Examples 4 to 6.**

| **Catalyst** | **Composition** | **Conversion (%) (GHSV = 350,000 h⁻¹)** | | | | |
|---|---|---|---|---|---|---|
| | | **700 °C** | **750 °C** | **800 °C** | **850 °C** | **900 °C** |
| LSM-P4 | La_{0.5}Sr_{0.5}MnO₃ | 95.7 | 100 | 100 | 100 | 100 |
| LSM-P5 | La_{0.5}Sr_{0.5}MnO₃ | 15.5 | 34.2 | 54.4 | 79.1 | 93.9 |
| LM-P6 | LaMnO₃ | 29.8 | 58.3 | 84.9 | 94.1 | 100 |

**Table 4: Composition and catalytic properties of catalysts after 12 days of their use**

| **Catalyst** | **Composition** | **Conversion (%) (GHSV = 350,000 h⁻¹)** | | | | |
|---|---|---|---|---|---|---|
| | | **700 °C** | **750 °C** | **800°C** | **850 °C** | **900 °C** |
| Rh/Al₂O₃-SP1 | 0.6%Rh na Al₂O₃ | 73.7 | 84 | 93 | 97 | 99 |
| CZA-SP2 | ZnCuAlO4 | 65 | 85 | 95 | 98 | 99 |
| Fe-FER-SP3 | 0.9%Fe na FER | 91 | 94.5 | 97 | 98 | 98.6 |
| LSM-P4 | La_{0.5}Sr_{0.5}MnO₃ | 72 | 95.5 | 99.2 | 100 | 100 |

### Example 11: Preparation of BaMnO₃ in the presence of sodium oxalate

10.5 g Ba(NO₃)₂, 6.8 g MnSO₄.H₂O and 13,4 g Na₂C₂O₄ was homogenized in an automatic agate mortar for 5-10 min. The procedure of Example 4 was then repeated and the BaMnO₃ catalyst was obtained.

### Example 12: Preparation ofZn_{0.5}Cu_{0.5}AlO₃ in the presence of sodium oxalate

9.9 g Zn(NO₃)₂.6H₂O, 8.1 g Cu(NO₃)₂.3H₂O, 25.0 g A1(NO₃)₃.9H₂O and 22.3 g Na₂C₂O₄ were homogenized in an automatic agate mortar for 5-10 min. Subsequently, the procedure of Example 4 was performed, and the catalyst Zn_{0.5}Cu_{0.5}AlO₃ was obtained.

### Example 13: Preparation of Ca_{0.7}Cu_{0.3}MnO₃ in the presence of sodium oxalate

6.6 g Ca(NO₃)₂.4H₂O, 2.9 g Cu(NO₃)₃.3H₂O, 6.8 g MnSO₄.H₂O and 13.4 g Na₂C₂O₄ was homogenized in an automatic agate mortar for 5-10 min. Subsequently, the procedure of Example 4 was repeated and the catalyst Ca_{0.7}Cu_{0.3}MnO₃ was obtained.

### Example 14: Preparation of Zn_{0.5}Sr_{0.5}Ce_{0.2}Mn_{0.8}O₃ in the presence of sodium oxalate

7.4 g Zn(NO₃)₂.6H₂O, 5.3 g Sr(NO₃)₂, 4.3 g Ce(NO₃)₃.6H₂O, 6.8 g MnSO₄.H₂O and 8.4 g Na₂C₂O₄ was homogenized in an automatic agate mortar for 5 to 10 minutes. The procedure of Example 4 was then repeated and the Zn₀.₅Sr₀.₅Ce₀.₂Mn₀.₈O₃ catalyst was obtained.

### Example 15: Preparation of Zr_{0.5}Co_{0.5}CeO₃ in the presence of sodium oxalate

3.2 g ZrOCl₂.8H₂O, 2.9 g Co(NO₃)₂.6H₂O, 8.1 g Ce(SO₄)₂.4H₂O and 7.2 g Na₂C₂O₄ was homogenized in an automatic agate mortar for 5-10 min. Subsequently, the procedure of Example 4 was repeated and the catalyst Zr_{0.5}Co_{0.5}CeO₃ was obtained.

### Example 16: Preparation of CuMnO₃ in the presence of sodium oxalate

9.7 g Cu(NO₃)₂.3H₂O, 6.8 g MnSO₄.H₂O and 13.4 g Na₂C₂O₄ was homogenized in an automatic agate mortar for 5-10 min. The procedure of Example 4 was then repeated and the CuMnO₃ catalyst was obtained.

### Example 17: Preparation of LaGe_{0.2F}e_{0.8}O3 in the presence of sodium oxalate

8.7 g La(NO₃)₃.6H₂O, 0.9 g GeCl₄, 6.5 g Fe(NO₃)₃.9H₂O and 6.7 g Na₂C₂O₄ was homogenized in an automatic agate mortar for 5-10 min. The procedure of Example 4 was then repeated and LaGe_{0.2}Fe_{0.8}O₃ catalyst was obtained.

### Example 18: Preparation of Cr_{0.8}Ni_{0.2}CeO₃ in the presence of sodium oxalate

6.4 g Cr(NO₃)₃.9H₂O, 1.2 g Ni(NO₃)₂.6H₂O, 8.7 g Ce(NO₃)₃.6H₂O and 6.7 g Na₂C₂O₄ was homogenized in an automatic agate mortar for 5-10 min. The procedure of Example 4 was then repeated and Cr_{0.8}Ni_{0.2}CeO₃ catalyst was obtained.

### Example 19: Preparation of YCoO₃ in the presence of sodium oxalate

7.7 g Y(NO₃)₃.6H₂O, 5.8 g Co(NO₃)₂.6H₂O and 6.7 g Na₂C₂O₄ were homogenized in an automatic agate mortar for 5-10 min. Subsequently, the procedure of Example 4 was repeated and the catalyst YCoO₃ was obtained.

### Example 20: Preparation of CeCoO₃ in the presence of sodium oxalate

8.7 g Ce(NO₃)₃.6H₂O, 5.8 g Co(NO₃)₂.6H₂O and 6.7 g Na₂C₂O₄ was homogenized in an automatic agate mortar for 5-10 min. The procedure of Example 4 was then repeated and the CeCoO₃ catalyst was obtained.

### Example 21: Preparation of Mg_{0.5}Sr_{0.5}SnO₃ in the presence of sodium oxalate

3.8 g Mg(NO₃)₃.6H₂O, 2.1 g Sr(NO₃)₂, 4.1 g SnC₂O₄ and 3.4 g Na₂C₂O₄ was homogenized in an automatic agate mortar for 5-10 min. The procedure of Example 4 was then repeated and Mg_{0.5}Sr_{0.5}SnO₃ catalyst was obtained.

### Example 22: Preparation of LaSbO₃ in the presence of sodium oxalate

8.7 g La(NO₃)₃.6H₂O, 4.6 g SbCl₃ and 6.7 g Na₂C₂O₄ were homogenized in an automatic agate mortar for 5-10 min. The procedure of Example 4 was then repeated and LaSbO₃ catalyst was obtained.

### Example 23: Preparation of Y_{0.5}Sr_{0.5}MnO₃ in the presence of sodium oxalate

3.8 g Y(NO₃)₃.6H₂O, 2.1 g Sr(NO₃)₂, 3.4 g MnSO₄.H₂O and 6.7 g Na₂C₂O₄ was homogenized in an automatic agate mortar for 5-10 min. The procedure of Example 4 was then repeated and Y_{0.5}Sr_{0.5}MnO₃ catalyst was obtained.

### Example 24: Preparation of MgTi_{0.2}Mn_{0.8}O₃ in the presence of sodium oxalate

5.1 g Mg(NO₃)₂.6H₂O, 0.9 g Ti(OC₂H₅)₄, 2.7 g MnSO₄.H₂O and 6.7 g Na₂C₂O₄ was homogenized in an automatic agate mortar for 5-10 min. The procedure of Example 4 was then repeated and MgTi_{0.2}Mn_{0.8}O₃ catalyst was obtained.

### Example 25: Preparation of Ce_{0.5}Sr_{0.5}MnO₃ in the presence of sodium oxalate

4.3 g Ce(NO₃)₃.6H₂O, 2.1 g Sr(NO₃)₂, 3.4 g MnSO₄.H₂O and 6.7 g Na₂C₂O₄ were homogenized in an automatic agate mortar for 5-10 min. The procedure of Example 4 was then repeated and Ce_{0.5}Sr_{0.5}MnO₃ catalyst was obtained.

### Example 26: Preparation of TlVO₃ in the presence of sodium oxalate

5.3 g TlNO₃, 3.2 g VCl₃ and 6.7 g Na₂C₂O₄ were homogenized in an automatic agate mortar for 5-10 min. The procedure of Example 4 was then repeated and TlVO₃ catalyst was obtained.

### Example 27: Preparation of La_{0.5}Sr_{0.5}FeO₃ in the presence of sodium oxalate

4.3 g La(NO₃)₃.6H₂O, 2.1 g Sr(NO₃)₂, 8.1 g Fe(NO₃)₃.9H₂O and 6.7 g Na₂C₂O₄ were homogenized in an automatic agate mortar for 5-10 min. The procedure of Example 4 was then repeated and La_{0.5}Sr_{0.5}FeO₃ catalyst was obtained.

### Example 28: Preparation of PbTi_{0.2}Mn_{0.8}O₃ in the presence of sodium oxalate

6.6 g Pb(NO₃)₂, 0.9 g Ti(OC₂H₅)₄, 2.7 g MnSO₄.H₂O and 6.7 g Na₂C₂O₄ was homogenized in an automatic agate mortar for 5-10 min. The procedure of Example 4 was then repeated and PbTi_{0.2}Mn_{0.8}O₃ catalyst was obtained.

### Example 29: Preparation of Ce_{0.5}Sr_{0.5}ZrO₃ in the presence of sodium oxalate

4.3 g Ce(NO₃)₃.6H₂O, 2.1 g Sr(NO₃)₂, 6.5 g ZrOCl₂.8H₂O and 6.7 g Na₂C₂O₄ were homogenized in an automatic agate mortar for 5-10 min. The procedure of Example 4 was then repeated and Ce_{0.5}Sr_{0.5}ZrO₃ catalyst was obtained.

### Example 30: Preparation of CaTi_{0.8}Ce_{0.2}O₃ in the presence of sodium oxalate

4.7 g Ca(NO₃)₂.4H₂O, 3.7 g Ti(OC₂H₅)₄, 1.7 g Ce(NO₃)₃.6H₂O and 6.7 g Na₂C₂O₄ was homogenized in an automatic agate mortar for 5-10 min. The procedure of Example 4 was then repeated and CaTi_{0.5}Ce_{0.2}O₃ catalyst was obtained.

### Example 31: Preparation of Ca_{0.7}Ce_{0.3}MnO₃ in the presence of sodium oxalate

3.3 g Ca(NO₃)₂.4H₂O, 2.6 g Ce(NO₃)₃.6H₂O, 3.4 g MnSO₄.H₂O and 6.7 g Na₂C₂O₄ was homogenized in an automatic agate mortar for 5-10 min. The procedure of Example 4 was then repeated and Ca_{0.7}Ce_{0.3}MnPO₃ catalyst was obtained.

### Example 32: Preparation of AgCe_{0.5}Mn_{0.5}O3 in the presence of sodium oxalate

3.4 g AgNO₃, 4.3 g Ce(NO₃)₃.6H₂O, 1.7 g MnSO₄.H₂O and 6.7 g Na₂C₂O₄ were homogenized in an automatic agate mortar for 5-10 min. The procedure of Example 4 was then repeated and AgCe_{0.5}Mn_{0.5}O₃ catalyst was obtained.

### Example 33: Preparation of Mg_{0.5}Cd_{0.5}WO₃ in the presence of sodium oxalate

2.6 g Mg(NO₃)₂.6H₂O, 3.1 g Cd(NO₃)₂.4H₂O, 6.6 g Na₂WO₄.2H₂O and 6.7 g Na₂C₂O₄ was homogenized in an automatic agate mortar for 5-10 min. The procedure of Example 4 was then repeated and Mg_{0.5}Cd_{0.5}WO₃ catalyst was obtained.

### Example 34: Preparation of Pb_{0.2}La_{0.8}MoO₃ in the presence of sodium oxalate

1.3 g Pb(NO₃)₂, 6.9 g La(NO₃)₃.6H₂O, 2.6 g MoO₂ and 6.7 g Na₂C₂O₄ was homogenized in an automatic agate mortar for 5-10 min. MoO₂ can also be used as finely ground or of a nanoparticle structure. Subsequently, the procedure of Example 4 was repeated and Pb_{0.2}La_{0.8}MoO₃ catalyst was obtained.

## Claims

1. A method of production of perovskite structure catalysts for high temperature decomposition of N₂O, the perovskite structure catalysts having a general formula A₁₋ₓBₓC_{y}D_{l-y}O₃-δ, and wherein A is selected from the group consisting of La, Ba, Zn, Ca, Zr, Cu, Cr, Y, Mg, Tl, Pb, Ag; B is selected from the group consisting of Sr, Cu, Co, Ge, Ni, Ti, Cd, La;
C and D are selected from the group consisting of Mn, Al, Ce, Sn, Sb, V, Fe, W, Mo;
x and y are independent numbers ranging from 0 to 1, and δ is the oxygen non-stoichiometric number of values ranging from -0.1 to 0.5;
**characterized in that** it comprises the following steps:
i) solid phases of water-soluble salts of cations A, B, C and D in a stoichiometric ratio are mixed with a 1.1 to 1.4 fold stoichiometric excess of a water-soluble anionic salt, of an anion selected from carbonate, bicarbonate, oxalate, sulfate, metaphosphate, phosphate, hydroxide, nitrite, chromate and dichromate, and a cation selected from the group comprising Na⁺, K⁺, NH₄⁺ii) the resulting mixture is homogenized;
iii) aqueous solution of a surfactant at a concentration of from 5 to 80 wt.% is added to the homogenized mixture from step ii) in an amount of up to 10 wt. % of the total weight of the homogenized salts of step ii), and the resulting mixture is stirred for 10 to 40 minutes to form a paste, the surfactant being selected from the group of foamless non-ionic surfactants containing -OH or -NH₂ terminal groups, comprising ethoxylated (C1 to C12) aliphatic alcohols, ethoxylated (C16 to C21) fatty acids;
iv) the paste from step iii) is kept to react at room temperature for at least two hours;
v) the paste from step iv) is then stirred in water to form a suspension;
vi) the suspension of the previous step is filtered,;
vii) the solid phase from the previous step is dried at a temperature in the range of from 100 to 150 °C;
viii) the dried solid phase is grounded to powder and calcined at a temperature of at least 800 °C for at least 2 hours.

2. The method according to claim 1, **characterized in that** the surfactant is in the form of 30 to 70% aqueous solution,.

3. The method according to any one of claims 1 or 2, **characterized in that** the water soluble salts of cations A, B, C and D are selected from the group comprising salts of inorganic acids, organic monocarboxylic, dicarboxylic and tricarboxylic (C1 to C10) acids, and (C1 to C4) alkoxide salts.

4. The method according to claim 3, **characterized in that** the water soluble salts of cations A, B, C and D are sulfates, carbonates, halides, nitrates, phosphates, acetates, formates, citrates, oxalates, lactates, ethoxides.

5. The method according to any one of claims 1 to 4, **characterized in that** the solid phase drying in step vii) takes place at a temperature of 120 °C.

6. The method according to any one of claims 1 to 5, **characterized in that** the calcination in step viii) takes place at a temperature in the range of from 800 °C to 1300 °C.

7. A catalyst of perovskite structure for high temperature decomposition of N₂O, obtainable using the method according to any one of the claims 1 to 6,, **characterized in that** it is selected from the group consisting of Zn_{0.5}Cu_{0.5}AlO₃, Ca_{0.7}Cu_{0.3}MnO₃, Zn_{0.5}Sr_{0.5}Ce_{0.2}Mn_{0.5}O₃, Zr_{0.5}Co_{0.5}CeO₃, LaGe_{0.2}Fe_{0.8}O₃, Cr_{0.8}Ni_{0.2}CeO₃, Mg_{0.5}Sr_{0.5}SnO₃, PbTi_{0.2}Mn_{0.8}O₃, Ce_{0.5}Sr_{0.5}ZrO₃, Mg_{0.5}Cd_{0.5}WO₃.

8. Use of catalysts of perovskite structure, selected from La_{0.5}Sr_{0.5}MnO₃, Zn_{0.5}Cu_{0.5}AlO₃, Ca_{0.7}Cu_{0.3}MnO₃, Zn_{0.5}Sr_{0.5}Ce_{0.2}Mn_{0.5}O₃, Zr_{0.5}Co_{0.5}CeO₃, LaGe_{0.2}Fe_{0.8}O₃, Cr_{0.8}Ni_{0.2}CeO₃, Mg_{0.5}Sr_{0.5}SnO₃, PbTi_{0.2}Mn_{0.8}0₃, Ce_{0.5}Sr_{0.5}ZrO₃, Mg_{0.5}Cd_{0.5}WO₃ for high temperature decomposition of N₂O.

## Patentansprüche

1. Verfahren zur Herstellung von Perowskit-Strukturkatalysatoren für die Hochtemperaturzersetzung von N₂O, wobei die Perowskit-Strukturkatalysatoren eine allgemeine Formel A₁₋ₓBₓC_{y}D_{1-y}O_{3-δ} haben und wobei A aus der Gruppe bestehend aus La, Ba, Zn, Ca, Zr, Cu, Cr, Y, Mg, Tl, Pb, Ag ausgewählt ist; B aus der Gruppe bestehend aus Sr, Cu, Co, Ge, Ni, Ti, Cd, La ausgewählt ist;
C und D sind ausgewählt aus der Gruppe bestehend aus Mn, Al, Ce, Sn, Sb, V, Fe, W, Mo;
x und y sind unabhängige Zahlen im Bereich von 0 bis 1, und δ ist die nichtstöchiometrische Sauerstoffzahl mit Werten im Bereich von -0,1 bis 0,5;
**dadurch gekennzeichnet, dass** es die folgenden Schritte umfasst:
i) Festphasen von wasserlöslichen Salzen der Kationen A, B, C und D im stöchiometrischen Verhältnis werden gemischt mit einem 1,1- bis 1,4-fachen stöchiometrischen Überschuss eines wasserlöslichen anionischen Salzes mit einem Anion ausgewählt aus Carbonat, Bicarbonat, Oxalat, Sulfat, Metaphosphat, Phosphat, Hydroxid, Nitrit, Chromat und Dichromat und einem Kation, ausgewählt aus der Gruppe bestehend aus Na⁺, K⁺, NH₄+
ii) die resultierende Mischung wird homogenisiert;
iii) wässrige Lösung eines Tensids mit einer Konzentration von 5 bis 80 Gew.-% wird zugesetzt zu der homogenisierten Mischung aus Schritt ii) in einer Menge von bis zu 10 Gew.-%. des Gesamtgewichts der homogenisierten Salze von Schritt ii), und die resultierende Mischung wird 10 bis 40 Minuten lang gerührt, um eine Paste zu bilden, wobei das Tensid ausgewählt wird aus der Gruppe der schaumlosen nichtionischen Tenside mit -OH oder -NH₂ Terminus umfassend ethoxylierte (C1 bis C12) aliphatische Alkohole, ethoxylierte (C16 bis C21) Fettsäuren;
iv) die Paste aus Schritt iii) wird mindestens zwei Stunden lang bei Raumtemperatur reagieren gelassen;
v) die Paste aus Schritt iv) wird anschließend in Wasser zu einer Suspension verrührt;
vi) die Suspension des vorherigen Schritts wird filtriert;
vii) die feste Phase aus dem vorherigen Schritt wird bei einer Temperatur im Bereich von 100 bis 150 °C getrocknet;
viii) die getrocknete feste Phase wird zu Pulver gemahlen und bei einer Temperatur von mindestens 800 °C für mindestens 2 Stunden kalziniert.

2. Verfahren nach Anspruch 1, **dadurch gekennzeichnet, dass** das Tensid in Form einer 30 bis 70 % wässrigen Lösung vorliegt.

3. Verfahren nach einem der Ansprüche 1 oder 2, **dadurch gekennzeichnet, dass** die wasserlöslichen Salze der Kationen A, B, C und D ausgewählt sind aus der Gruppe umfassend Salze anorganischer Säuren, organischer Monocarboxyl-, Dicarboxyl- und Tricarboxyl-(C1 bis C10)-Säuren und (C1 bis C4)-Alkoxidsalze.

4. Verfahren nach Anspruch 3, **dadurch gekennzeichnet, dass** die wasserlöslichen Salze der Kationen A, B, C und D Sulfate, Carbonate, Halogenide, Nitrate, Phosphate, Acetate, Formiate, Citrate, Oxalate, Lactate, Ethoxide sind.

5. Verfahren nach einem der Ansprüche 1 bis 4, **dadurch gekennzeichnet, dass** die Festphasentrocknung in Schritt vii) bei einer Temperatur von 120 °C erfolgt.

6. Verfahren nach einem der Ansprüche 1 bis 5, **dadurch gekennzeichnet, dass** die Kalzinierung in Schritt viii) bei einer Temperatur im Bereich von 800 °C bis 1300 °C erfolgt.

7. Katalysator mit Perowskitstruktur zur Hochtemperaturzersetzung von N₂O, erhältlich unter Verwendung des Verfahrens nach einem der Ansprüche 1 bis 6, **dadurch gekennzeichnet, dass** er aus der Gruppe bestehend aus Zn_{0.5}Cu_{0.5}AlO₃, Ca_{0.7}Cu_{0.3}MnO₃, Zn_{0.5}Sr_{0.5}Ce_{0.2}Mn_{0.8}O₃, Zr_{0.5}Co_{0.5}CeO₃, LaGe_{0.2}Fe_{0.8}O₃, Cr_{0.8}Ni_{0.2}CeO₃, Mg_{0.5}Sr_{0.5}SnO₃, PbTi_{0.2}Mn_{0.8}O₃, Ce_{0.5}Sr_{0.5}ZrO₃, Mg_{0.5}Cd_{0.5}WO₃ ausgewählt ist.

8. Verwendung von Katalysatoren mit Perowskitstruktur, ausgewählt aus La_{0.5}Sr_{0.5}MnO₃, Zn_{0.5}Cu_{0.5}AlO₃, Ca_{0.7}Cu_{0.3}MnO₃, Zn_{0.5}Sr_{0.5}Ce_{0.2}Mn_{0.8}O₃, Zr_{0.5}Co_{0.5}CeO₃, LaGe_{0.2}Fe_{0.8}O₃, Cr_{0.8}Ni_{0.2}CeO₃, Mg_{0.5}Sr_{0.5}SnO₃, PbTi_{0.2}Mn_{0.8}O₃, Ce_{0.5}Sr_{0.5}ZrO₃, Mg_{0.5}Cd_{0.5}WO₃ für die Hochtemperaturzersetzung von N₂O.

## Revendications

1. Un procédé de production de catalyseurs à structure pérovskite pour la décomposition à haute température de N₂O, les catalyseurs à structure pérovskite ayant une formule générale A₁₋ₓBₓC_{y}D_{1-y}O_{3-δ}, et dans laquelle A est choisi dans le groupe constitué de La, Ba, Zn, Ca, Zr, Cu, Cr, Y, Mg, Tl, Pb, Ag; B est choisi dans le groupe constitué de Sr, Cu, Co, Ge, Ni, Ti, Cd, La; C et D sont choisis dans le groupe constitué de Mn, Al, Ce, Sn, Sb, V, Fe, W, Mo;
x et y sont des nombres indépendants allant de 0 à 1, et δ est un nombre non stoechiométrique d'oxygène de valeurs allant de -0,1 à 0,5;
**caractérisé en ce qu'**il comprend les étapes suivantes:
i) des phases solides de sels hydrosolubles des cations A, B, C et D dans un rapport stoechiométrique sont mélangées avec un excès stoechiométrique de 1,1 à 1,4 fois d'un sel anionique hydrosoluble, d'un anion choisi parmi carbonate, bicarbonate, oxalate, sulfate, métaphosphate, phosphate, hydroxyde, nitrite, chromate et dichromate, et un cation choisi dans le groupe comprenant Na⁺, K⁺, NH4⁺;
ii) le mélange résultant est homogénéisé;
iii) une solution aqueuse d'un tensioactif à une concentration de 5 à 80 % en poids est ajoutée au mélange homogénéisé de l'étape ii) en une quantité allant jusqu'à 10 % en poids du poids total des sels homogénéisés de l'étape ii), et le mélange résultant est agité pendant 10 à 40 minutes pour former une pâte, le tensioactif étant choisi dans le groupe des tensioactifs non-ioniques sans mousse contenant -OH ou -NH₂ groupes terminaux, comprenant les (C1 à C12) alcools aliphatiques éthoxylés, les (C16 à C21) acides gras éthoxylés;
iv) la pâte de l'étape iii) est maintenue à réagir à température ambiante pendant au moins deux heures;
v) la pâte de l'étape iv) est ensuite agitée dans de l'eau pour former une suspension;
vi) la suspension de l'étape précédente est filtrée;
vii) la phase solide de l'étape précédente est séchée à une température dans la plage de 100 à 150 °C;
viii) la phase solide séchée est réduite en poudre et calcinée à une température d'au moins 800 °C pendant au moins 2 heures.

2. Le procédé selon la revendication 1, **caractérisé en ce que** le tensioactif est sous forme de solution aqueuse à 30 à 70 %.

3. Le procédé selon l'une quelconque des revendications 1 ou 2, **caractérisé en ce que** les sels hydrosolubles des cations A, B, C et D sont choisis dans le groupe comprenant les sels des acides inorganiques, des (C1 à C10) acides organiques monocarboxyliques, dicarboxyliques et tricarboxyliques et les sels de (C1 à C4) alcoxydes.

4. Le procédé selon la revendication 3, **caractérisé en ce que** les sels hydrosolubles des cations A, B, C et D sont des sulfates, carbonates, halogénures, nitrates, phosphates, acétates, formiates, citrates, oxalates, lactates, éthoxydes.

5. Le procédé selon l'une quelconque des revendications 1 à 4, **caractérisé en ce que** le séchage de la phase solide à l'étape vii) a lieu à une température de 120 °C.

6. Le procédé selon l'une quelconque des revendications 1 à 5, **caractérisé en ce que** la calcination à l'étape viii) a lieu à une température dans la plage de 800 °C à 1300 °C.

7. Un catalyseur de structure pérovskite pour la décomposition à haute température de N₂O, obtenable par le procédé selon l'une quelconque des revendications 1 à 6, **caractérisé en ce qu'**il est choisi dans le groupe constitué par Zn_{0.5}Cu_{0.5}AlO₃, Ca_{0.7}Cu_{0.3}MnO₃, Zn_{0.5}Sr_{0.5}Ce_{0.2}Mn_{0.5}O₃, Zr_{0.5}Co_{0.5}CeO₃, LaGe_{0.2}Fe_{0.8}O₃, Cr_{0.8}Ni_{0.2}CeO₃, Mg_{0.5}Sr_{0.5}SnO₃, PbTi_{0.2}Mn_{0.8}0₃, Ce_{0.5}Sr_{0.5}ZrO₃, Mg_{0.5}Cd_{0.5}WO₃.

8. Utilisation de catalyseurs de structure pérovskite, choisis parmi La_{0.5}Sr_{0.5}MnO₃, Zn_{0.5}Cu_{0.5}AlO₃, Ca_{0.7}Cu_{0.3}MnO₃, Zn_{0.5}Sr_{0.5}Ce_{0.2}Mn_{0.5}O₃, Zr_{0.5}Co_{0.5}CeO₃, LaGe_{0.2}Fe_{0.8}O₃, Cr_{0.8}Ni_{0.2}CeO₃, Mg_{0.5}Sr_{0.5}SnO₃, PbTi_{0.2}Mn_{0.8}O₃, Ce₀.₅Sr₀.₅ZrO₃, Mg₀.₅Cd₀.₅WO₃ pour la décomposition à haute température de N₂O.
